Europäisches Patentamt

European Patent Office

Office européen des brevets

(11) Publication number:

**0 087 265**
**B1**

(12) **EUROPEAN PATENT SPECIFICATION**

(45) Date of publication of patent specification: **10.07.85**

(21) Application number: **83300772.7**

(22) Date of filing: **16.02.83**

(51) Int. Cl.⁴: **H 04 L 25/49**

(54) Line transmission systems.

(30) Priority: **17.02.82 GB 8204736**
**05.03.82 GB 8206493**

(43) Date of publication of application:
**31.08.83 Bulletin 83/35**

(45) Publication of the grant of the patent:
**10.07.85 Bulletin 85/28**

(84) Designated Contracting States:
**BE DE FR NL SE**

(56) References cited:
**FR-A-2 349 242**
**GB-A-1 036 009**
**GB-A-1 310 509**

**PROCEEDINGS 1982 INTERNATIONAL**
**SYMPOSIUM ON SUBSCRIBER LOOPS AND**
**SERVICES, 20th-24th September 1982, pages**
**191-195, Toronto, CA.**

**GEC TELECOMMUNICATIONS JOURNAL, no.**
**41, 1980, pages 10-14, Rugby, G.B.**

(73) Proprietor: **The General Electric Company, p.l.c.**
**1 Stanhope Gate**
**London W1A 1EH (GB)**

(72) Inventor: **Bylanski, Peter**
**2 Chester Gardens Argyle Road**
**London, W13 (GB)**

(74) Representative: **Dolwin, John Davison**
**Central Patent Department Wembley Office**
**The General Electric Company, p.l.c.**
**Hirst Research Centre East Lane**
**Wembley Middlesex HA9 7PP (GB)**

(56) References cited:
**GEC TELECOMMUNICATIONS JOURNAL**

**APPLICATIONS OF WALSH FUNCTIONS. 1970.**
**PROCEEDINGS SYMPOSIUM AND**
**WORKSHOP, 31st March 1970, pages 238-247,**
**Washington, D.C., USA**

Courier Press, Leamington Spa, England.

## Description

The present invention relates to line transmission systems.

In particular the invention is concerned with line transmission systems in which information to be signalled takes the form of one or more streams of binary digit values. Such systems include, for example, local area subscriber's pulse-code modulation telephone links.

A line transmission system of this type is described in GEC Telecommunications Journal No. 41 (1980), under the title "A digital transmission system for multi-terminal applications" by D.J. Clothier and P. Bylanski. In this system binary digit values are transmitted in bursts in each direction in turn over a local line between a subscriber's unit and an exchange, one burst being transmitted in each direction in each of a succession of 125 microsecond frame periods. Each binary digit value is represented in transmission by an appropriate waveform in accordance with a line code known as WAL 2, these waveforms comprising substantially one cycle of a square-wave signal having a period equal to the time interval allotted for the transmission of one binary digit value, and having a phase dependent upon the digit value to be transmitted.

According to the present invention a line transmission system in which a first stream of binary digit values to be signalled over a path during respective ones of a succession of time intervals is represented in transmission by a square-wave signal having a period substantially equal to the length of one of said time intervals, a binary one value being represented in transmission by said square-wave signal having a predetermined phase and a binary zero value being represented in transmission by said square-wave signal having the opposite phase to said predetermined phase, is characterised in that a second stream of binary digit values is arranged to be signalled over said path by means of differences in amplitude of said square-wave signal during respective time intervals that are substantially coincident with respective ones of said succession of time intervals, one binary value in said second stream of digit values being represented by a relatively high square-wave signal amplitude and the other binary value by a relatively low square-wave signal amplitude.

Binary digit values in said first and second streams may be derived from a common source or from independent sources.

A line transmission system in accordance with the present invention will now be described by way of example with reference to the accompanying drawings, of which:—

Figures 1 to 3 show electric signal waveforms and coding tables illustrating the operation of the system, and

Figure 4 and Figures 5 and 6 show respectively apparatus for a transmitter and a receiver of the system.

In line transmission systems such as digital telephone systems analogue speech signals are presently amplitude-sampled once every 125 microseconds, that is, at a rate of 8 KHz, and the amplitude samples are encoded for transmission in accordance with, say, the CCITT A-law in which each sample is represented by an eight-bit code group. Each analogue speech signal is therefore represented in transmission by a stream of binary digit values, or bits, at an average rate of 64 K bitssec, and if two extra bits are added to each code group for signalling or control purposes the overall signal to be transmitted is a stream of bits at 80 K bits/sec.

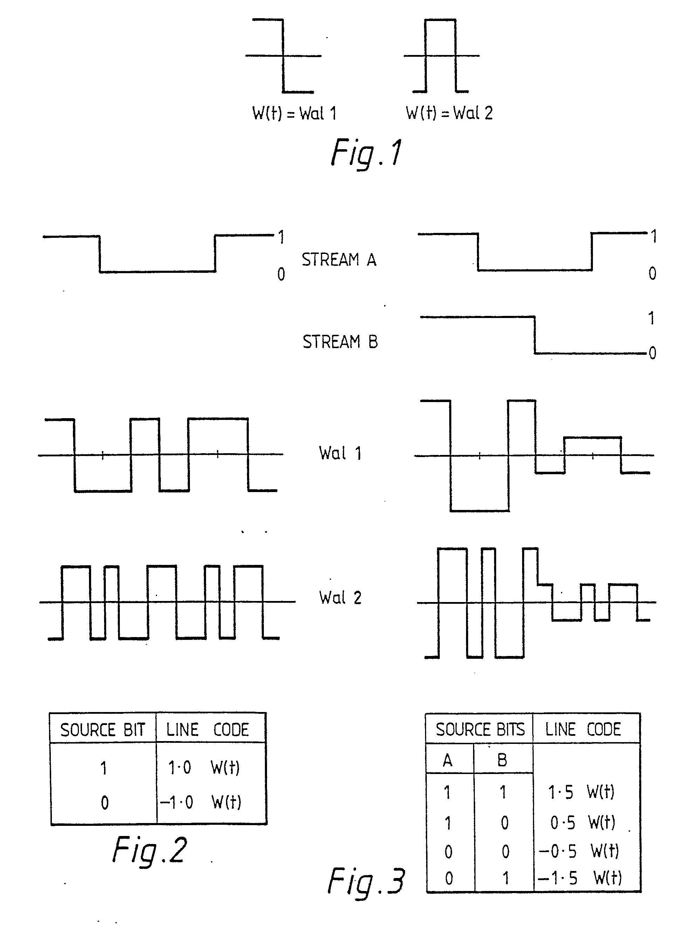

In the method referred to above for transmitting such digital information over wire cables each binary digit value is represented by a Walsh-code symbol W(t) of the appropriate polarity (or phase). As shown in Figure 1 of the drawing there are two Walsh-code symbols W(t) commonly used, designated Wal 1 and Wal 2, each comprising effectively one cycle of a square-wave "carrier". The Wal 1 code symbol commences with a positive half cycle, whereas for the Wal 2 code symbol the square-wave is delayed by a quarter cycle so that the positive half cycle occurs during the middle portion of the respective binary digit period. In each case the binary value "1" is represented by the code symbol as shown while the binary digit value "0" is represented by the inverse of that symbol, in which the square-wave "carrier" has the opposite phase.

The waveforms shown in Figure 2 of the drawing illustrate respectively a binary digit value sequence "1001" and the transmitted waveform utilising first Wal 1 and then Wal 2 line code symbols. It will be appreciated that these line codes, sometimes referred to as diphase signals, have no mean d.c. component and provide timing transitions independent of the bit value sequence, Wal 2 providing two such transitions per bit at a cost of increased high frequency energy content.

Where better quality speech coding is required an analogue speech signal may be sampled at a rate of 16 KHz, which with eight-bit coding and two signalling bits requires a signalling capacity of 144 K bits/sec. This would normally be provided by a corresponding increase in the line signalling rate, but since line attenuation increases with frequency this option is limited by the realisable performance of the detector circuitry.

In the present transmission system the higher-rate stream of digit values is split into two streams in which one stream, designated A in Figure 3 contains, say alternate speech sample code groups together with the signalling and control bits as in known systems, while the other stream, designated B, contains the interpolated extra code groups. The digit values in the A stream are then represented by the respective Walsh line code symbols, while the digit values of the B stream are arranged to determine the amplitude of the square-wave carrier, as shown by the line code waveforms and the line code table of Figure 3, where the binary digit value sequence "1001" from the A stream is shown combined with the sequence "1100" from the B stream. Preferably the B stream digit values are made up with extra bits to a rate of 80 K bits/sec, so that the amplitude modulation of the square wave carrier signal can be carried out in step with the Walsh symbol intervals.

In this way the capacity of an existing line link can be doubled without significantly affecting the signal frequency spectrum. At the same time the multi-level code transmission will be compatible with the known systems, since the Walsh code symbols detected by a known receiver will represent the standard 64 K bits/sec plus signalling and control bits embodied in the A stream. A multilevel detector, however, will also detect the amplitude modulation to add the B stream bits to those of the A stream.

If desired of course the A and B streams may represent signals from two independent sources, rather than distributed signals from a common source.

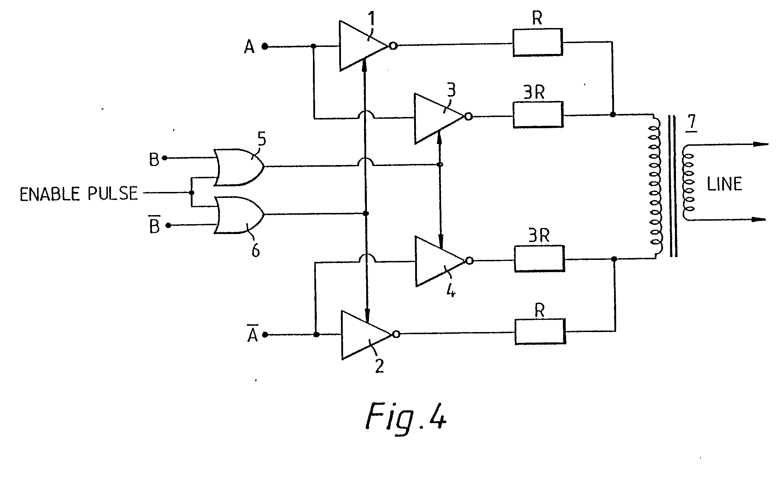

Referring now to Figure 4 in a transmitter of the system the A stream of digit values and its inverse, each stream represented by a respective stream of Walsh code symbols, are applied respectively to the inputs of two pairs of tri-state inverting drivers or amplifiers 1 and 2, 3 and 4. In dependence upon the digit values of the B stream and its inverse, applied to OR gates 5 and 6, either the pair of drivers 1 and 2 are enabled, to provide an output current waveform of a given peak value through the resistors R and the primary winding of a line transformer 7, or the pair of drivers 3 and 4 are enabled to provide an output current waveform of one third of the above-mentioned given peak value through the resistors 3R and the primary winding of the transformer 7. It will be appreciated that the transmission of line symbols having peak values in the ratio 1:3 give rise to substantially equal received "eye openings" for the benefit of the receiver level detectors.

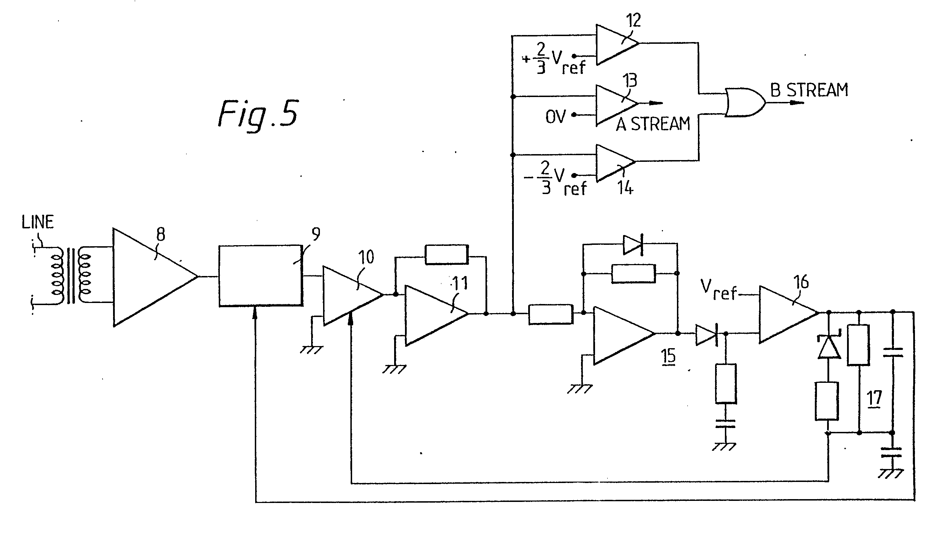

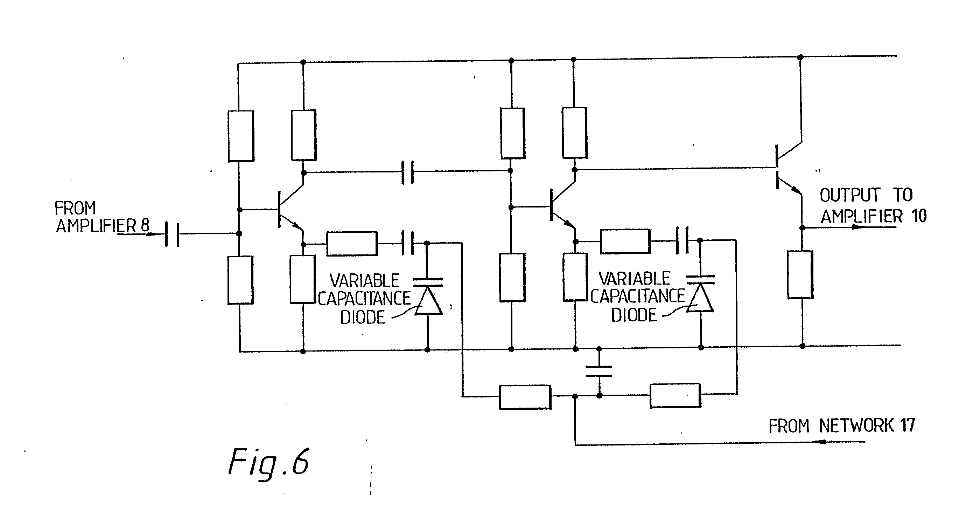

As shown in Figure 5 the received line signals are applied by way of a differential amplifier 8 to a variable equaliser 9, this variable equaliser comprising for example, as shown in Figure 6, two common emitter transistor amplifier stages in cascade each having a variable capacitance diode in its respective emitter circuit. From the equaliser 9 the received signals are applied by way of a gain-controlled amplifier 10 and a further amplifier 11 to the inputs of three voltage level detectors 12, 13 and 14, and a peak rectifier circuit 15.

The circuit 15 provides a voltage signal at its output which represents the peak level of the received signals, and this voltage signal is compared with a reference voltage V to derive, by way of an amplifier 16 and a network 17, a control voltage for the equaliser 9 and a control current for the gain-controlled amplifier 10. The effect of the gain control current on the gain-controlled amplifier 10 is to tend to maintain the peak values of the received signals at the output of the amplifier 11 constant and substantially of the same magnitude as the reference voltage V.

In dependence upon the transmitted line symbols therefore, at the mid-point of any one line symbol time interval the received signal waveform may have a value of substantially plus or minus V, or plus or minus 1/3V. The voltage level detectors 12 and 14 compare the output signal level from the amplifier 11 respectively with plus 2/3V and minus 2/3V, signal levels of greater than these voltages being detected as a "1" in the B stream. The detector 13 compares the output signal level from the amplifier 11 with 0 Volts, a positive signal level being detected as a "1" in the A stream.

In local area service the eight-bit pulse code groups representing pulse coded speech samples, together with the two extra bits for signalling or control, herein referred to as extended code groups, are commonly transmitted between subscriber's apparatus and the local exchange in burst mode. In this mode one or more extended code groups are transmitted over a subscriber's line pair as a sequence of line code symbols in one direction followed, after a predetermined delay to allow for propagation time, by a similar number of extended code groups in the opposite direction.

The exchange of bursts of pulses takes place at intervals of a corresponding multiple of the basic coding interval of 125 microseconds for 8 KHz sampling or 62.5 microseconds for 16 KHz sampling. For example at a 16 KHz sampling rate a group of sixteen extended code groups each of ten bits may be assembled and transmitted as a burst of eighty four-level line code symbols in each direction once every millisecond, the symbols being transmitted at a rate of, say, 192 KHz. In each one millisecond frame period therefore there is allowed a total of thirty-two line symbol periods for propagation or other delays, some of which may be utilised to transmit groups of line symbols as "headers" for the bursts for timing purposes.

It will be appreciated that such long bursts require correspondingly large buffer stores to hold the sixteen code groups as they are generated until the time comes in each frame for the burst to be transmitted, and correspondingly to hold the sixteen code groups received in reply while awaiting decoding or onward transmission. Shorter bursts, such as two-group or four-group bursts may therefore be preferred.

**Claims**

1. A line transmission system in which a first stream of binary digit values to be signalled over a path during respective ones of a succession of time intervals is represented in transmission by a square-wave signal having a period substantially equal to the length of one of said time intervals, a binary one value being represented in transmission by said square-wave signal having a predetermined phase and a binary zero value being represented in transmission by said square-wave signal having the opposite phase to said predetermined phase, characterised in that a second stream of binary digit values is arranged to be signalled over said path by means of differences in amplitude of said square-wave signal during respective time intervals that are substantially coincident with respective ones of said succession of time intervals, one binary value in said second stream of digit values being represented by a relatively high square-wave signal amplitude and the other binary value by a relatively low square-wave signal amplitude.

2. A line transmission system in accordance with Claim 1 wherein the binary digit values in said first and second streams derive from a common source.

**Patentansprüche**

1. Leitungsübertragungssystem, bei dem ein erster Strom binärer Ziffernwerte, die während jeweiliger Intervalle einer Folge von Zeitintervallen über einen Weg signalisiert werden sollen, bei der Übertragung durch ein Rechteckschwingungssignal mit einer Periode dargestellt ist, die im wesentlichen gleich der Länge eines der Zeitintervalle ist, wobei ein binärer Einswert bei der Übertragung durch das Rechteckschwingungssignal mittels einer vorbestimmten Phase und ein binärer Nullwert bei der Übertragung durch das Rechteckschwingungssignal mittels einer bezüglich der vorbestimmten Phase entgegengesetzten Phase dargestellt ist, dadurch gekennzeichnet, daß ein zweiter Strom über den Weg zu signalisierender binärer Ziffernwerte mittels Differenzen in der Amplitude des Rechteckschwingungssignals während jeweils solcher Zeitintervalle dargestellt ist, die im wesentlichen mit den jeweiligen Zeitintervallen der Folge von Zeitintervallen übereinstimmen, wobei ein Binärwert in dem zweiten Strom von Ziffernwerten durch eine relativ hohe Amplitude des Rechteckschwingungssignals und der andere Binärwert durch eine relativ niedrige Amplitudes des Rechteckschwingungssignals dargestellt ist.

2. Leitungsübertragungssystem nach Anspruch 1, bei dem die binären Ziffernwerte in dem ersten und dem zweiten Strom von einer gemeinsamen Quelle stammen.

**Revendications**

1. Dispositif de transmission sur ligne, dans lequel un premier train de valeurs numériques binaires à transmettre sous forme de signaux sur une voie pendant des premiers intervalles de temps respectifs parmi une succession d'intervalles de temps est représenté en transmission par un signal d'onde carrée ayant une période sensiblement égale à la longueur de l'un desdits premiers intervalles de temps, une valeur binaire un étant représentée en transmission par ledit signal d'onde carrée présentant une phase prédéterminée et une valeur binaire zéro étant représentée en transmission par ledit signal d'onde carré présentant la phase opposée à ladite phase prédéterminée, caractérisé par le fait qu'un second train de valeurs numériques binaires est conformé de manière à être transmis sous forme de signaux sur ladite voie au moyen de différences en amplitude dudit signal d'onde carrée pendant des intervalles de temps respectifs qui coïncident sensiblement avec lesdits premiers intervalles de temps respectifs parmi ladite succession d'intervalles de temps, une valeur binaire dudit second train de valeurs numériques étant représentée par une amplitude relativement élevée du signal d'onde carrée et l'autre valeur binaire par une amplitude relativement faible dudit signal d'onde carrée.

2. Dispositif de transmission sur ligne selon la revendication 1, caractérisé par le fait que les valeurs numériques binaires desdits premier et second trains proviennent d'une source commune.

W(t) = Wal 1    W(t) = Wal 2

*Fig.1*

STREAM A

STREAM B

Wal 1

Wal 2

| SOURCE BIT | LINE CODE |
|------------|-----------|
| 1 | 1·0  W(t) |
| 0 | −1·0  W(t) |

*Fig.2*

| SOURCE BITS | | LINE CODE |
|---|---|-----------|
| A | B | |
| 1 | 1 | 1·5  W(t) |
| 1 | 0 | 0·5  W(t) |
| 0 | 0 | −0·5  W(t) |
| 0 | 1 | −1·5  W(t) |

*Fig.3*

1

Fig. 4

Fig.5

$+\frac{2}{3}V_{ref}$

$12$

$13$

$0V$    A STREAM

B STREAM

$-\frac{2}{3}V_{ref}$   $14$

LINE

$8$

$9$

$10$

$11$

$15$

$V_{ref}$   $16$

$17$

0 087 265

Fig.6

FROM
AMPLIFIER 8

OUTPUT TO
AMPLIFIER 10

VARIABLE
CAPACITANCE
DIODE

VARIABLE
CAPACITANCE
DIODE

FROM NETWORK 17

0 087 265